# EUROPÄISCHE PATENTSCHRIFT

(11) **EP 1 671 823 B1**
(45) Veröffentlichungstag und Bekanntmachung des Hinweises auf die Patenterteilung: **13.01.2010**
(21) Anmeldenummer: 05025400.2
(22) Anmeldetag: 22.11.2005
(51) Int. Cl.: B60H 1/00

(54) **Gehäuse für ein Kraftfahrzeug-Belüftungssystem**
Housing for a vehicle ventilation system
Boîtier pour un système de ventilation d'automobile

(30) Priorität: 20.12.2004 DE 102004062425
(43) Veröffentlichungstag der Anmeldung: 21.06.2006
(73) Patentinhaber: Behr GmbH & Co. KG, 70469 Stuttgart (DE)
(72) Erfinder: Huber, Frank, 71229 Leonberg (DE)
(74) Vertreter: Mantel, Berthold Friedrich

(56) Entgegenhaltungen:
- EP-A1- 1 251 018
- EP-A2- 1 078 786
- EP-A2- 1 134 103
- DE-A1- 3 813 116
- DE-A1- 19 524 068

## Beschreibung

Die Erfindung betrifft ein Gehäuse für ein Kraftfahrzeug-Belüftungssystem gemäß dem Oberbegriff des Anspruches 1,

Bei herkömmlichen Kraftfahrzeug-Belüftungssystemen sind getrennt vom Gehäuse ausgebildete Platten für die Lagerung der Kinematik vorgesehen, die am Gehäuse befestigt werden.

Ferner ist als nächster Stand der Technik aus der EP 1 078 786 A2 ein Verdampfergehäusedeckel bekannt an dem ein elektrisches Schaltboard mit elektrischen Komponenten integriert ist.

Ausgehend von diesem Stand der Technik ist es Aufgabe der Erfindung, ein verbessertes Gehäuse zur Verfügung zu stellen. Insbesondere soll durch Erfindung die Montage vereinfacht werden.

Diese Aufgabe wird gelöst durch ein Gehäuse mit den Merkmalen des Anspruchs 1. Vorteilhafte Ausgestattungen sind Gegenstand der Unteransprüche.

Erfindungsgemäß ist eine Belüftungs-, Heizungs- und/oder Klimaanlage mit einem mehrteilig ausgebildeten Anlagen-Gehäuse vorgesehen, in bzw. an dem eine Mehrzahl von die Luftverteilung regelnden Klappen mit dazugehörenden Getrieben angebracht ist, wobei mindestens eine Lagerplatte integriert in einen Gehäuseteil des Gehäuse und einstückig mit demselben ausgebildet ist. Hierbei bildet die Lagerplatte mit ihrer Innenseite selbst direkt einen Teil eines luftführenden Bereichs. Die einstückige Ausgestaltung mit dem Gehäuse verringert die Anzahl der erforderlichen Teile, wodurch sich unter anderem die Montage vereinfacht, so dass Kosten eingespart werden können. Femer ist kein Bauraum für Befestigungselemente für die Lagerplatte erforderlich.

Die Lagerplatte weist mindestens einen abstützenden Bereich auf, der einstückig mit der Lagerplatte ausgebildet ist. Durch das Integrieren der Abstützung, vorliegend für eine Gehäusetrennwand, die einen Luftkanal abtrennt, wird die Anzahl der erforderlichen Teile weiter verringert. Bei der Trennwand handelt es sich bevorzugt um eine Trennwand, die einen Fußluftkanal abtrennt. Durch das Vorsehen einer Abstützung, welche die Trennwand im Gehäuse positioniert, können die Wandstärke verringert und die Toleranzen für die Fertigung der Trennwand vergrößert werden, so dass eine weitere Kostenerspamis möglich ist.

Die Lagerplatte weist bevorzugt versteifende Rippen auf, die einstückig mit der Lagerplatte ausgebildet sind. Die Rippen erhöhten die Festigkeit bei möglichst geringem Gewicht.

Beim Gehäuse, das gebildet wird durch die Gehäuseteile samt der Lagerplatte, handelt es sich bevorzugt um ein spritzgegossenes Kunststoff-Gehäuse. Dieses kann sehr kostengünstig hergestellt werden.

Der die Lagerplatte bildende Gehäuseteil ist bevorzugt zwischen zwei Gehäuseteilen mittels einer Nut-Feder-Verbindung eingesetzt. Die Nut-FederVerbindungen ermöglichen einen gewissen Toleranzausgleich und dichten auf einfachste Weise ausreichend sicher den Gehäuseinnenraum gegenüber der Umgebung ab.

Bevorzugt ist in der Lagerplatte eine Aufnahme für ein Teil mit einer Kurvenbahn einer Kinematik mindestens eines Klappenantriebs integriert. Dabei ist bevorzugt auf beiden Seiten des Teils je eine Kurvenbahn vorgesehen, so dass mit einem Antrieb, beispielsweise eines Stellmotors oder eines mechanischen Antriebs über eine Flexwelle von der Bedienkonsole, zwei Klappen, insbesondere die Defrostklappe und die Fußraumklappe, in Abhängigkeit voneinander betätigt werden können.

Im Folgenden ist die Erfindung anhand eines Ausführungsbeispiels mit Variante teilweise unter Bezugnahme auf die Zeichnung näher edäutert. Es zeigen:
- Fig. 1: eine perspektivische Ansicht eines Teils eines Klimaanlagen-Gehäuses mit einer Lagerplatte,
- Fig. 2: eine Detailansicht des Bereichs der Lagerplatte, und

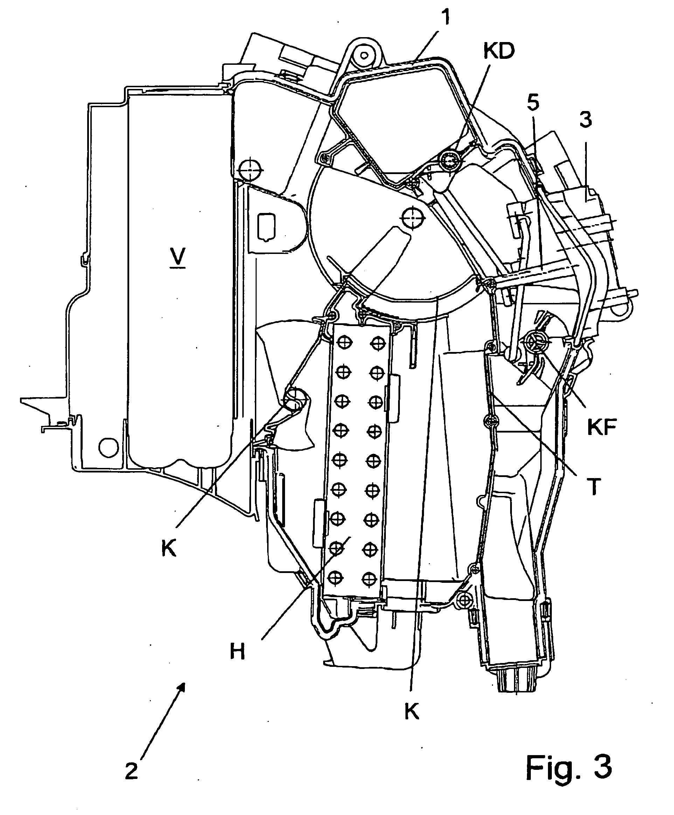

- Fig.3: eine schematische, teilweise aufgeschnittene Ansicht der Klimaanlage mit angebrachter Lagerplatte und Klappen.

In einem Gehäuse 1 einer Kraftfahrzeug-Klimaanlage 2 mit einem Verdampfer V und einem Heizkörper H ist eine Lagerplatte 3 integriert vorgesehen. Hierbei bildet die Innenseite der Lagerplatte 3 einen Teil eines Luftkanals, so dass auf die Lagerplatte 3 als ein Gehäuseteil Bezug genommen werden kann. Die Lagerplatte 3 ist mittels einer Nut-Feder-Verbindung zwischen zwei Gehäusehälften eingesetzt, welche im entsprechenden Bereich eine Aussparung aufweisen.

Die Lagerplatte 3 dient der Anbringung der Kinematik, d.h. des Antriebs und des für die gewünschte Klappenbewegung erforderlichen Getriebes (Kurvengetriebe), wodurch in diesem Gehäusebereich besonders große Kräfte auftreten können. Auf die Ausgestaltung der Kinematik wird an späterer Stelle näher eingegangen.

Um die in die Lagerplatte 3 eingeleiteten Kräfte ohne wesentliche Verformungen aufnehmen zu können, weist die Lagerplatte 3 versteifende Rippen 4 auf. Femer ist einstückig mit der Lagerplatte 3 ein Abstützdom 5, auf den im Folgenden auch als abstützender Bereich Bezug genommen wird, ausgebildet. Dieser Abstützdom 5 stützt mit seinem Ende eine Gehäusetrennwand T im Inneren des Gehäuses 1 ab, welche den Fußluftkanal abtrennt, wodurch die Abmessungen des Fußluftkanals festgelegt und sichergestellt wird, so dass die Gehäusetrennwand T relativ dünn ausgebildet und mit relativ großen Toleranzen hergestellt sein kann.

Die Lagerplatte 3 dient - unter anderem auf Grund ihrer stabilen Ausgestaltung - als eine Art von zusätzlicher Gehäuseversteifung und -abstützung in diesem Bereich, so dass sie die Festigkeit des Gehäuses 1 erhöht und auf Grund dessen zumindest in diesem Bereich keine zusätzlichen, getrennt ausgebildet und nachträglich am Gehäuse 1 anzubringenden Gehäusewandabstützungen vorgesehen sein müssen. Dabei sind die versteifenden und abstützenden Bereiche (vorliegend insbesondere versteifende Rippen 4 und der Abstützdom 5) in der Lagerplatte 3 integriert und einstückig mit der selben ausgebildet.

Gemäß dem vorliegenden Ausführungsbeispiel ist ein Stellmotor (nicht dargestellt) an der Lagerplatte 3 angebracht, der mit seinem Abtrieb über zwei getrennt ausgebildete Getriebe (Kurvengetriebe) zwei Klappen K in Abhängigkeit voneinander betätigt, vorliegend die Klappe für die die Luftzufuhr zum Fußraum (Fußraumklappe KF) und die Klappe zum Entfrosten der Windschutzscheibe (Defrostklappe KD), welche vor oder in entsprechenden Luftkanälen (nicht dargestellt) angeordnet sind.

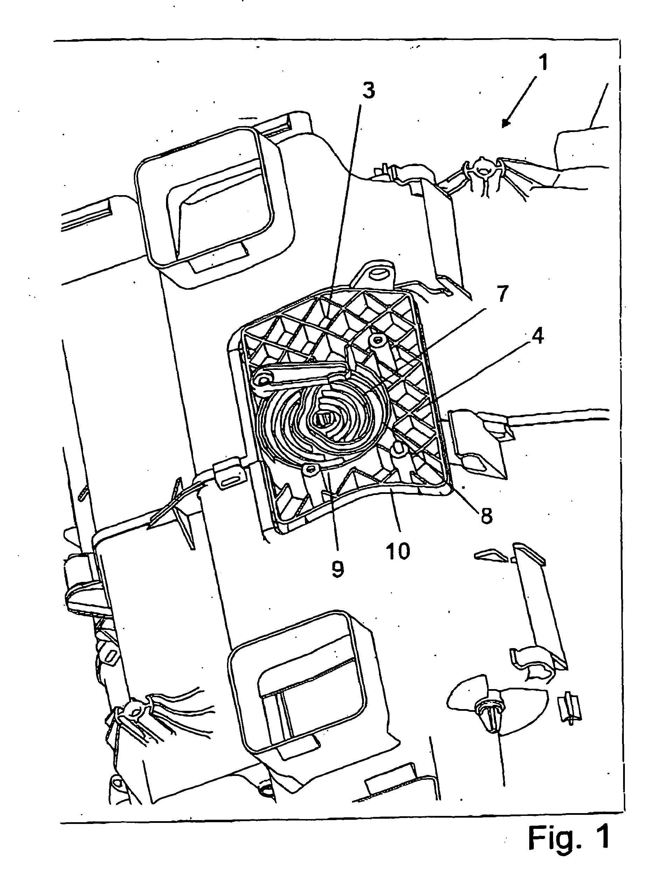

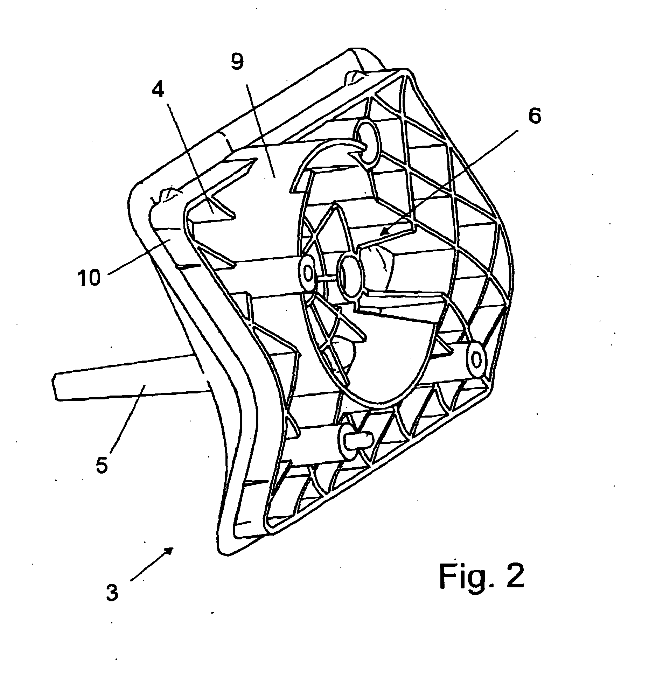

In einer Aufnahme 6 (siehe Fig. 2), welche in der Lagerplatte 3 auf der Gehäuseaußenseite ausgebildet ist, ist ein Teil 7 eingesetzt. Das Teil 7 weist auf seinen beiden Seiten je eine im Prinzip auf bekannte Weise ausgebildete Kurvenbahn 8 für eine Getriebeübersetzung auf, in welcher je eine der Klappensteuerung dienende Kulisse entlang gleitet. Aus Festigkeits-, Herstellungs- und Toleranzgründen ist das Teil 7 getrennt von der Lagerplatte 3 ausgebildet und aus einem anderen Kunststoff spritzgegossen, und ist in die Lagerplatte 3 eingesetzt (siehe Fig. 1).

Die Aufnahme 6 selbst weist einen Rand 9 auf, an welchem die sich außerhalb der Aufnahme 6 angeordneten, sich kreuzend verlaufenden, versteifenden Rippen 4 mit einem Ende angebracht sind. Das andere Ende endet an einem äußeren umlaufenden Rand 10, welcher die Lagerplatte 3 begrenzt. Auch innerhalb der Aufnahme 6 sind spinnennetzartig verlaufende versteifende Rippen 4 vorgesehen. Durch die versteifenden Rippen 4 ist die Lager platte 3 ausreichend steif ausgebildet, so dass keine zusätzlichen Maßnahmen zum Versteifen des Gehäuses 1 in diesem, auf Grund des Kraftflusses besonderen Belastungen ausgesetzten Bereich getroffen werden müssen.

Gemäß einer Variante der Klimaanlage ist an Stelle der elektrischen Betätigung der Klappen KD und KF eine mechanische Betätigung vorgesehen, so dass kein Stellmotor an der Lagerplatte angebracht ist, sondem eine Flexwelle die Stellbewegung für die beiden Klappen KD, KF von der Bedienkonsole her überträgt. Die Kinematik selbst entspricht ansonsten im Wesentlichen derjenigen des ersten Ausführungsbeispiels.

## Patentansprüche

1. Belüftungs-, Heizungs- und/oder Klimaanlage mit einem mehrteilig ausgebildeten Anlagen-Gehäuse (1), in bzw. an dem eine Mehrzahl von die Luftverteilung regelnden Klappen (K) mit dazugehörenden Getrieben angebracht ist, wobei mindestens eine Lagerplatte (3) zur Anbringung eines solchen Getriebes integriert in einen Gehäuseteil des Gehäuses (1) und einstückig mit demselben ausgebildet ist und die Lagerplatte (3) mindestens einen abstützenden Bereich (5) aufweist, der einstückig mit der Lagerplatte (3) ausgebildet ist, **dadurch gekennzeichnet, dass,** der abstützende Bereich (5) eine Gehäusetrennwand (T) im Inneren des Gehäuses (1) abstützt.

2. Belüftungs-, Heizungs- und/oder Klimaanlage nach Anspruch 1, **dadurch gekennzeichnet, dass** die Lagerplatte (3) versteifende Rippen (4) aufweist, die einstückig mit der Lagerplatte (3) ausgebildet sind.

3. Belüftungs-, Heizungs- und/oder Klimaanlage nach einem der Ansprüche 1 oder 2, **dadurch gekennzeichnet, dass** die Gehäusetrennwand (T) einen Luftkanal abtrennt.

4. Belüftungs-, Heizungs- und/oder Klimaanlage nach einem der vorhergehenden Ansprüche, **dadurch gekennzeichnet, dass** das Gehäuse (1), gebildet durch die Gehäuseteile samt der Lagerplatte (3), ein spritzgegossenes Kunststoff-Gehäuse ist.

5. Beiüftungs-, Heizungs- und/oder Klimaanlage nach einem der vorhergehenden Ansprüche, **dadurch gekennzeichnet, dass** das die Lagerplatte (3) aufweisende Gehäuseteil zwischen zwei weiteren Gehäuseteilen mittels einer Nut-Feder-Verbindung eingesetzt ist.

6. Belüftungs-, Heizungs- und/oder Klimaanlage nach einem der vorhergehenden Ansprüche, **dadurch gekennzeichnet, dass** in der Lagerplatte (3) eine Aufnahme (6) für ein Teil (7) mit einer Kurvenbahn (8) einer Kinematik mindestens eines Klappenantriebs integriert ist.

7. Belüftungs-, Heizungs- und/oder Klimaanlage nach Anspruch 6, **dadurch gekennzeichnet, dass** das Teil (7) zwei Kurvenbahnen (8) aufweist.

8. Belüftungs-, Heizungs- und/oder Klimaanlage nach Anspruch 6 oder 7, **dadurch gekennzeichnet, dass** der Klappenantrieb derjenige der Defrostklappe (KD) und der Fußraumklappe (KF) ist.

9. Belüftungs-, Heizungs- und/oder Klimaanlage nach einem der vorhergehenden Ansprüche, **dadurch gekennzeichnet, dass** die Belüftungs-, Heizungs- und/oder Klimaanlage zumindest eines der folgenden Bauteile umfasst: Wärmetauscher, Heizkörper (H), Verdampfer (V), Zuheizer, insbesondere PTC-Zuheizer, Filter, Temperaturmischklappe (K), einen oder mehrere Strömungskanäle und eine oder mehrere Steuerklappen (KD, KF) zur Mischung und/oder Verteilung der Luft auf die Strömungskanäle.

## Claims

1. Ventilation, heating and/or air-conditioning unit with a housing (1) formed of several components, in or on which a plurality of valves (K) that regulate the air distribution are attached together with their associated gear systems, such that at least one base-plate (3) for the attachment of such gear systems is integrated in a housing component of the said housing (1) and is formed as one piece, integrally therewith, and the said base-plate (3) has at least one supporting area (5) which is formed as one piece, integrally with the base-plate (3), **characterised in that** the supporting area (5) supports a housing partition wall (T) located inside the housing (1).

2. Ventilation, heating and/or air-conditioning unit according to Claim 1, **characterised in that** the base-plate (3) has stiffening ribs (4) which are formed integrally with the base-plate (3).

3. Ventilation, heating and/or air-conditioning unit according to either of Claims 1 or 2, **characterised in that** the housing partition wall (T) divides an air duct.

4. Ventilation, heating and/or air-conditioning unit according to any of the preceding claims, **characterised in that** the housing (1), formed by the housing components together with the base-plate (3), is an injection-moulded plastic housing.

5. Ventilation, heating and/or air-conditioning unit according to any of the preceding claims, **characterised in that** the housing component comprising the base-plate (3) is held between two other housing components by means of a groove-and-spring connection.

6. Ventilation, heating and/or air-conditioning unit according to any of the preceding claims, **characterised in that** in the base-plate (3) is integrated a mounding (6) for a component (7) with a curved track (8) of a kinematic system for at least one valve drive.

7. Ventilation, heating and/or air-conditioning unit according to Claim 6, **characterised in that** the component (7) has two curved tracks (8).

8. Ventilation, heating and/or air-conditioning unit according to Claims 6 or 7, **characterised in that** the valve drive is that of the defrosting valve (KD) and the foot-space valve (KF).

9. Ventilation, heating and/or air-conditioning unit according to any of the preceding claims, **characterised in that** the ventilation, heating and/or air-conditioning unit comprises at least one of the following components: heat exchanger, heater (H), evaporator (V), auxiliary heater, in particular a PTC auxiliary heater, filter, temperature mixing valve (K), one or more flow ducts and one or more control valves (KD, KF) for mixing and/or distributing the air to the flow ducts.

## Revendications

1. Système de ventilation, de chauffage et / ou de climatisation comprenant un carter (1) du système, configuré en plusieurs parties, carter dans lequel ou sur lequel est fixée une pluralité de volets (K) régulant la répartition de l'air et comprenant des mécanismes de commande faisant partie de ces volets, où au moins une plaque d'appui (3) servant à fixer un tel mécanisme de commande est intégrée à une partie du carter (1) et configurée en formant une seule et même pièce avec celui-ci, et la plaque d'appui (3) présente au moins une zone support (5) qui est configurée en formant une seule et même pièce avec la plaque d'appui (3),
**caractérisé en ce que** la zone support (5) supporte une paroi de séparation (T) du carter à l'intérieur du carter (1).

2. Système de ventilation, de chauffage et / ou de climatisation selon la revendication 1, **caractérisé en ce que** la plaque d'appui (3) présente des nervures de renfort (4) qui sont configurées d'un seul tenant avec la plaque d'appui (3).

3. Système de ventilation, de chauffage et / ou de climatisation selon l'une des revendications 1 ou 2, **caractérisé en ce que** la paroi de séparation (T) du carter divise un conduit d'air.

4. Système de ventilation, de chauffage et / ou de climatisation selon l'une quelconque des revendications précédentes, **caractérisé en ce que** le carter (1) formé par les parties du carter, y compris la plaque d'appui (3), est un carter en matière plastique moulée par injection.

5. Système de ventilation, de chauffage et / ou de climatisation selon l'une quelconque des revendications précédentes, **caractérisé en ce que** la partie du carter comportant la plaque d'appui (3) est introduite entre deux autres parties du carter, par un assemblage mâle / femelle.

6. Système de ventilation, de chauffage et / ou de climatisation selon l'une quelconque des revendications précédentes, **caractérisé en ce qu'**un logement (6), pour une pièce (7) comportant une piste de cames (8) d'une cinématique d'au moins un entraînement de volet, est intégré dans la plaque d'appui (3).

7. Système de ventilation, de chauffage et / ou de climatisation selon la revendication 6, **caractérisé en ce que** la pièce (7) comporte deux pistes de cames (8).

8. Système de ventilation, de chauffage et / ou de climatisation selon la revendication 6 ou 7, **caractérisé en ce que** l'entraînement de volet est celui du volet de dégivrage (KD) et du volet de l'espace pour les pieds (KF).

9. Système de ventilation, de chauffage et / ou de climatisation selon l'une quelconque des revendications précédentes, **caractérisé en ce que** le système de ventilation, de chauffage et / ou de climatisation comprend au moins l'un des composants suivantes : un échangeur de chaleur, un radiateur (H), un évaporateur (V), un dispositif de chauffage auxiliaire, en particulier un dispositif de chauffage auxiliaire à coefficient de température positif (CTP), un filtre, un volet mélangeur de température (K), un ou plusieurs conduits d'écoulement et un ou plusieurs volets de commande (KD, KF) servant au mélange et / ou à la répartition de l'air sur les conduits d'écoulement.
